# EUROPEAN PATENT SPECIFICATION

(11) **EP 3 733 943 B1**
(45) Date of publication and mention of the grant of the patent: **02.06.2021**
(21) Application number: 20020120.0
(22) Date of filing: 12.03.2020
(51) Int. Cl.: D04H 1/4382, D04H 1/4391, D04H 1/485, D04H 1/488, D04H 1/49, D04H 1/492, H01M 50/403, H01M 50/411, H01M 50/44, H01M 10/06

(54) **NON-WOVEN FABRIC SUPPORT FOR MULTI-TUBULAR SHEATHS**
VLIESSTOFFTRÄGER FÜR MEHRROHRIGE UMMANTELUNGEN
SUPPORT DE TISSU NON TISSÉ POUR GAINES MULTI-TUBULAIRES

(30) Priority: 29.04.2019 IT 201900006409
(43) Date of publication of application: 04.11.2020
(73) Proprietor: Advanced Nonwovens Technologies Srl, 20090 Caleppio di Settala (MI) (IT)
(72) Inventor: Merlotti, Stefano, I-21052 Busto Arsizio (Varese) (IT); Menti, Silvano, I- 36050 Monteviale (Vicenza) (IT)
(74) Representative: Contessini, Pier Carlo

(56) References cited:
- WO-A1-2011/097661
- US-A1- 2010 015 372
- US-A1- 2014 308 518
- US-A1- 2016 287 046

## Description

### Field of the Invention

The present invention relates to a non-woven fabric for multi-tubular sheaths. In particular, the present invention relates to non-woven fabric for making multi-tubular sheaths for positive electrodes of industrial lead-acid batteries for "electric motive power traction" and/or "energy reserve" and for coupling with traditional separators as an alternative to fiberglass for containing the active mass of lead spread into the battery electrodes.

### State of the Art.

Multi-tubular sheaths have been known for long time for the positive electrodes production in industrial batteries for forklifts and energy reserves, consisting of parallel tubes with a square, helical (in particular for flat plates) or round base. The circular base multi-tubular sheath is the most used and the diameter of each tube is lower than 1 cm.

Until 1960 they consisted of a tubular glass fiber product that was cut to size of the plate and in an amount equal to the lead wires of the same.

The disadvantages of this product were the high cost, the handling difficulty due to the product fragility and the environmental hazard, as well as the electrochemical quality characteristics for high electrical resistance and the excessive rigidity.

Subsequently, with the yarn evolution, multi-tubular sheaths were used, made of fabric (formed by weft and warp), consisting of polyester-based or polyester-based and polypropylene based textile fibers, thermoformed by hot molding according to the sheath geometry.

The fabric thermoformability was ensured by the presence of polypropylene in the thread or by a resination step for the polyester yarns; moreover, this fabric exhibited great homogeneity. These features helped to make the sheath resistant when using the battery. However, a disadvantage of this fabric type is the high cost.

Subsequent solutions consisted of 2 non-woven polyester fabrics impregnated with phenolic resin, superimposed, sewn with parallel seams and thermoformed in order to obtain the multi-tubular article.

With the technology progress, in the 80s we moved to a non-woven fabric produced with a spunbond technology, consisting of polyester filaments tied with synthetic thermoforming and impregnated with binding resins (in particular, of the acrylic and/or styrene-butadiene type).

In textile jargon, the synthetic resins are the resins that bind the fibers one each other. They are generally used in a liquid form and applied in various ways (impregnation, spray, foaming, etc.) and carry out their bonding power among the fibers so as to obtain a compact non-woven fabric.

The non-woven fabric obtained by the spunbond technology has continuous filaments of 3-4 dtex, randomly distributed, where 1 dtex is the measurement unit for the fiber linear density and corresponds to 1 gram per km.

The various fibers making up the non-woven fabric are tied one each other by mechanical needling (by means of needles) and/or fixed by a calender at points at which, due to the effect of temperature, a material melting takes place.

These solutions are cheaper than the previous ones but have some disadvantages: the thickness is irregular due to the fiber random distribution, so there is a filament excess in some areas and a deficiency in other areas; moreover, the lack of regularity of the non-woven fabric means that, by inserting the active material into the positive electrode, this tends to come out of the sheath in the areas where the non-woven fabric is more open. Another disadvantage linked to this sheath arises from the fact that during the needling the needles could break and parts of them could remain trapped in the non-woven fabric with the risk of creating problems for the battery life. The stitch binding of this non-woven fabric also creates heat-sealed areas, forming real barriers to the electric current passage, thus causing a reduction in the battery capacity.

The motive power traction batteries must guarantee a duration of at least 1500 working cycles, while the stationary batteries must last over 10 years. The multi-tubular sheath must withstand the entire battery life in an acid environment and with high oxidation points caused by the electrochemical transformation in the charging and discharging phases.

The electric current, both in the charging and in the discharging phase, is generated by the electron passage between the electrodes and the higher is the efficiency the lower is the electrical resistance.

The multi-tubular sheath in the electrode production process typically contains mixtures of lead dioxide (PbO₂), which is very fine flake-shaped powder, and trilead tetroxide (Pb₃O₄), which is spherical-shaped powder of different diameters. These powders have a differentiated granulometric range that can vary according to the uses from 2 to 25 µm, and it is very important that the finer particles escape in a limited way from the sheath. This means that the sheath holding capacity must be maximum and therefore the porosities of the non-woven fabric must be infinitesimal, and that the thickness must be uniform and this depends on the distribution regularity of the fibers forming the non-woven fabric.

In the electrochemical transformation phases determining the battery charge and discharge, the positive active mass contained in the multi-tubular sheath increases and reduces its volume. At the same time, the compact lead dioxide and/or trilead tetroxide mixture making up this mass must be facilitated in this volume change and the greater is the plate and therefore the battery performance the higher is the elasticity that allows to follow the aforementioned pulsations.

Batteries must not be self-discharged, which is why the components, including the non-woven fabric that constitutes the sheath, must have an absolutely limited metal and other pollutants content (few ppm) that could feed this phenomenon.

A fortiori, the possible presence of metal needle parts would lead to an abnormal battery operation.

The non-woven fabric forming the sheath must consist of fibers resistant to sulfuric acid, anodic oxidation, at operating temperatures of 80-90 °C.

European patent application EP 1720210 describes a multi-tubular sheath for lead batteries consisting of two spunbond sheets having in the middle portion a needled and calendered non-woven fabric consisting of bi-component PET-PTB fibers to form a single sheet. Subsequently, two of these sheets are superimposed and fixed with parallel seams at intervals such as to obtain, after thermoforming, regular tubes to obtain the desired geometry.

Japanese patent application JP 57095078 describes a fiber coated sleeve for the stationary battery. It consists of non-woven fabric comprising multiple types of fibers with different melting points. In fact, polyester fibers with a main melting point of 260 °C are used, which are mixed in a range of 3-50% by weight with fibers with a melting point lower than those of the polyester acting as a binder (e.g. polyethylene fiber), with a melting point of 127-210 °C, such as to form a suitable for use textile support.

These non-woven fabrics are stacked and sewn in equidistant strips. For the tube formation guides are inserted between the sewn parts and the sheath is formed by melting the low melting fibers.

The European patent EP 1961059B1 deals with multi-tubular sheaths made up of different types of polyester fibers, two-component fibers and/or polypropylene fibers, suitably mixed and processed in a water interlacing plant (spunlace), fed with carders designed to have longitudinally oriented fibers on one side of the non-woven fabric and transversally oriented fibers on the opposite side. The side with longitudinally oriented fibers consists mainly of fibers having a high melting point, arranged so as to facilitate the introduction of the sheath formation guides and the material flow in the electrode filling process. In this patent it is stated that in this way the advantage consists in a greater yield in the plate formation step and an electrical resistance lower than the prior patents.

In the product life the sheath is at direct contact with a sulfuric acid solution that in the various cycles allows the electrons to migrate from the positive to the negative electrodes to supply energy and vice versa for the recharging. Consequently, in the battery cycles the positive electrodes change their volume up and down according to the charging and discharging phases. This means that the acid solution must be perfectly in contact with the active mass constituting the positive electrode.

The Applicant of the present patent application has therefore found the need to realize a non-woven fabric that can be used to make a multi-tubular sheath capable of guaranteeing elasticity, so that the active mass is always compact for a correct energy supplying to the polarities to be used. At the same time, the sheath must have a remarkable capacity for absorbing liquid without placing barriers to the electron flow, and therefore must have a very low electrical resistance.

Furthermore, in the battery production subject to severe charging and discharging cycles, as well as to mechanical and thermal stresses (typical case, their use in cars and motorbikes transport), separators between anode and cathode made up of porous plastic insulating material (PE, PVC,...) coupled with a layer of glass wool aimed at preventing the detachment of the active mass of lead from the cathode are used. Due to the temperature inside the battery, the glass wool tends to lose its mechanical characteristics, leading to an early battery malfunction. At the same time, glass wool makes the lead recovery difficult and therefore expensive.

The Applicant of this patent application has also found the need that this non-woven fabric can be used to make a coupling with traditional separators as an alternative to glass wool.

### Summary of the Invention

According to a first aspect, the present invention refers to a fabric such as that one indicated in claim 1.

The present invention in fact arises from the general consideration according to which the technical problem highlighted above can be solved in an effective and reliable way by means of a non-woven support including a fiber mixture consisting at least of:
a) bi-component fiber with linear density between 2-4 dtex, length 40-80 mm, made up of two materials coaxially extruded where the internal part has a melting point higher than the external part;
b) organic hydrophilic polyester and/or polypropylene fibers, with a density between 1.2-1.6 dTex, length 30-60 mm, equipped with surface channels.

The support of the present invention is suitable to be used to make multi-tubular sheaths for positive electrodes of industrial lead accumulators for "electric motive power traction" and/or "energy reserve" and for coupling with traditional separators as an alternative to glass wool for containment of the active mass of lead spread into the battery electrodes.

Thanks to the use of the above described fiber mixture, the sheath made with the non-woven support of the present invention is provided with elasticity such that the active mass is always compact for a correct energy supply to the polarities to be used.

During filling operations, this allows the finer particle sizes of lead oxide to be contained within the electrode and to have a low electrical resistance, so as not to release over time, due to the oxidation and the sulfuric acid solution effect, metals producing self-discharge and electron flow barriers. A reduction in battery performance is thus avoided, improving performance and having to recover a smaller quantity of oxide waste.

Furthermore, thanks to the use of the above described fiber mixture, the support of the present invention coupled to traditional separators allows a longer battery life, since the polyester is not subject to depletion of its mechanical characteristics under the use conditions and keeps unchanged over time contact between the cathode surface and the electrolyte solution, resulting in a lower electrical resistance.

According to a preferred embodiment, said bi-component fiber is made up of two coaxial extruded materials wherein the external part has a melting temperature lower than 200 °C.

According to a preferred embodiment, said bi-component fiber is provided with crimping, in the length, obtained by multiple mechanical processes, a characteristic undulation favoring the fiber cohesion during the non-woven fabric making process, increases the products wear resistance (stress distribution among several fibers), their bulkiness, the ply covering power and ensuring elasticity to the final product.

According to a preferred embodiment, said bi-component fiber is subjected to heat stabilization and surface finishing treatment that covers the filaments.

In this way the non-woven fabric cohesion is maximized and, consequently, the optimal physical-mechanical characteristics for the multi-tubular sheath realization, too.

According to a preferred embodiment, said organic fibers of polyester and/or polypropylene are provided with crimping and characterized by the presence of surface channels.

In this way, a liquid absorption capillary effect is made possible, which, together with a permanent hydrophilic treatment, gives liquid permeability characteristics to the non-woven fabric, that a non-woven fabric consisting of polyester and/or polyester bi-component only could not have, although not compromising at the same time the physical-mechanical characteristics required for the multi-tubular sheath realization.

According to a preferred embodiment, said organic fibers of polyester and/or polypropylene are very thinly distributed in various layers in a homogeneous way, crossed with spunlace technology and with a high hygroscopic capacity. This allows for high wettability, with a value of about 350 g H₂O per 100 g of sheath.

According to a preferred embodiment, said organic fibers of polyester and/or polypropylene do not contain metal catalysts which can go into solution and pollute the battery.

This minimizes the porosities size.

According to a preferred embodiment, said non-woven fabric support is composed of said fiber mixture comprising from 5 to 60%, preferably from 20 to 60%, of said bi-component fiber and from 40 to 95%, preferably 40 to 80% of said polyester and/or polypropylene fiber with respect to the total mass fiber.

According to a preferred embodiment, said non-woven fabric support has a percentage of bi-component fiber which differs according to the degree of rigidity required to the multi-tubular sheath, which is made with it, or to the coupling support for traditional separators.

According to a preferred embodiment, said non-woven fabric support has a percentage of hydrophilic polyester fiber which differs according to the time and the absorption capacity of the liquids required to the multi-tubular sheath, which is made with it, or to the support of coupling for traditional separators.

According to a preferred embodiment, said fiber mixture further comprises circular section polyester staple fiber with a melting point higher than 200 °C of linear density comprised between 1-2 dtex, length 30-60 mm.

According to a preferred embodiment, also said circular section polyester staple fiber is provided with crimping, heat stabilization treatment and surface coating that covers the filaments in order to maximize the cohesion of the non-woven fabric.

According to a preferred embodiment, said fiber mixture comprises a) from 10 to 60% of said bi-component fiber, b) from 10 to 60% of said polyester and/or polypropylene fiber, and c) from 10 to 60% of said staple polyester fiber with respect to the mass of the total fiber.

According to a preferred embodiment, the non-woven support of the present invention has a weight between 110 and 180 g/m².

In this way, the non-woven support of the present invention is used for the realization of multi-tubular sheaths.

According to a preferred embodiment, the non-woven support of the present invention has a weight between 20 and 110 g/m².

In this way, the non-woven support of the present invention is used for the realization of coupling supports for traditional separators.

According to a preferred embodiment, the non-woven support of the present invention consists of a mat having a number of plies from 4 to 20 distributed appropriately, each weighing between 4 and 20 g/m².

In this way, the non-woven support of the present invention achieves the microporosity and absorption requirements.

According to a preferred embodiment, the non-woven support of the present invention is impregnated with resin via various polymeric binders, such as for example styrene-acrylics, acrylics, polyurethanes, etc.

In this way, the non-woven support of the present invention so impregnated with appropriate resin improves the resistance to the acid solution with which the sheath is in contact and also improves the resistance to oxidation, typically present at a high degree in the environment in which the sheath itself operates. The resin-coated support also allows to increase the rigidity of the multi-tubular sheath and of the coupling support for traditional separators that use this support, at the same time giving better hot thermoforming characteristics.

According to a preferred embodiment, said resin coating is carried out by different deposition methods: impregnation, foaming, coating or molding.

According to a preferred embodiment, the additional quantity of resin varies from 20 to 60 g/m².

According to a preferred embodiment, said non-woven fabric support, preferably in the resin-coated form, can contain additives chosen, for example, from the group of agents to assist the homogeneous distribution of the polymer, agents to increase speed and/or capacity. to absorb liquids, to modify their rigidity, agents to give color or customize the external appearance, and the like, provided they do not affect the performance of the support itself.

In a second aspect, the present invention refers to a method for making a non-woven fabric support such as that indicated in claim 9.

The present invention in fact arises from the general consideration according to which the above highlighted technical problem can be solved in an effective and reliable way by means of a method for making a non-woven fabric support including the steps of:
i) preparing a) a bi-component fiber with a linear density between 2-4 dtex, length 40-80 mm, consisting of two coaxially extruded materials where the inner part has a melting point higher than the external part, and b) organic hydrophilic fibers of polyester and/or polypropylene, with a density between 1.2-1.6 dTex, length 30-60 mm, provided with surface channels;
ii) interleaving said fibers a) and b) with high-pressure water jets ("spunlace" technology) to form a mixture of said fibers bound together.

According to a preferred embodiment, the method of the present invention further comprises the step c) of preparing a circular section staple polyester fiber with a melting point higher than 200 °C having linear density comprised between 1-2 dtex, length 30-60 mm and interlacing by high pressure water jets said fibers a), b) and c) to form a mixture of said fibers linked together.

The presence of an appropriate crimping in the fibers favors the non-woven fabric elasticity, leading to improve the sheath mechanical resistance to the expansion and contraction cycles related to the battery charging and discharging.

According to a preferred embodiment, the method of the present invention further comprises the step of subjecting said non-woven fabric support to resin coating by depositing polymeric binders of various kinds, such as styrene-acrylics, acrylics, polyurethanes, etc., by impregnation, foaming, coating or molding.

According to a preferred embodiment, the above described fibers are intimately weighed and mixed one each other and conveyed into loaders feeding the ply forming carders, which suitably overlapped and oriented lead, after the interlacing process with water, to obtain a homogeneous non-woven fabric.

In this way, the fiber by weight quantity is such as to allow sufficient toughness, elasticity, high microporosity and liquid absorption.

According to a preferred embodiment, the above described fibers constitute a mat of plies and are then interlaced by high pressure water jets coming out from internal section nozzles suitable for maximizing the water kinetic energy which, being transferred to the fibers, determines their cohesion.

According to a preferred embodiment, said nozzles have maximum diameters between 90 and 160 µm, and are arranged at regular intervals of 0.6 to 1.0 mm apart, on strips of special anti-corrosion steel, with one, two or even three ranges, across the non-woven fabric width. Each steel strip provided with holes is mounted on an injector, which supplies the water, at the needed flow rate and pressure. The water transferred to the fiber mat is immediately and conveniently removed by means of a suction system placed under the injector, to favor the fiber cohesion. The final non-woven fabric is obtained after the repeated passage of the fiber mat under an adequate number of injectors, positioned on both sides of the fiber mat.

According to a preferred embodiment, the still wet non-woven fabric, after the water interlacing step, is conveniently calibrated in thickness, by means of cold calendering.

In this way, the surface plastic film formation by fiber melting (or part of them) is prevented, which would invalidate time and liquid absorption capacity by the fabric support.

According to a preferred embodiment, said calibration pressures range from 3 to 25 tons.

According to a preferred embodiment, the non-woven fabric is then dried and, preferably, heat-stabilized, and melted in the low melting part of the bi-component fibers.

In this way, compactness and rigidity is given to the product.

According to a preferred embodiment, said resin-coated non-woven support is preferably dried in a continuous dryer at temperatures ranging from 100 °C to 180 °C, varying according to the drying speed (typically from 1 to 5 minutes) and to the amount of polymer deposited on the non-woven fabric.

According to a preferred embodiment, the resin-coated product can be subjected to calendering which uniforms the thickness and smoothes the surfaces.

In this way, both the thermoforming process and, once the sheath is obtained, the oxide filling process for the electrode construction is optimized.

According to a preferred embodiment, at the end of the above described phases, the non-woven fabric is cut in width according to the customer's needs and rolled into rolls of diameter such as to be easily stored and handled.

According to a preferred embodiment, each roll is protected by a film preserving it from external agents which would modify its characteristics during the storage period.

According to a preferred embodiment, in case multi-tubular sheaths are to be made, the non-woven fabric rolls of the present invention are then unwound, cut in width and transformed into strips of sizes compatible with the sheaths to be obtained. The strips are wrapped in rolls for the subsequent sewing operation of two layers of non-woven fabric by parallel seams in order to form pockets of a size compatible with the electrode to be obtained.

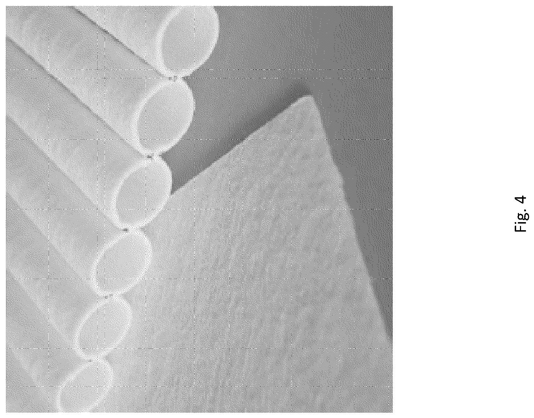

According to a preferred embodiment, metal spindles are inserted in each pocket, calibrated in turn of a compatible size with the tubes to be obtained which, due to the thermoforming effect, determine the sheath shape, as shown in Figure 4.

According to a preferred embodiment, the thermoforming phase takes place at a temperature such as to allow the melting by impregnation of the low melting component of the bi-component fibers and/or of any polymer resin present.

According to a preferred embodiment, the thermoformed product is then cut according to the sheath size to be obtained.

According to a preferred embodiment, in the case in which non-woven supports of the present invention are to be made by coupling for traditional separators, the non-woven fabric of the present invention is cut into rolls of height from 90 to 180 mm, preferably, and then coupled to a polythene separator and further rolled up.

According to a preferred embodiment for the battery types where the sheath electrical resistance must be very low, a non-woven fabric of the present invention of approximately 150-160 g/m² with a percentage of bi-component fiber of 40-50% and the remaining percentage of organic fibers of polyester and/or polypropylene with high hydrophilicity is realized. This support is calendered at the end of the water interlacing line, for smoothing and thickness homogeneity. In this case, the resin treatment step is not necessary.

Further characteristics and advantages of the present invention will become clearer from examination of the following detailed description of preferred, but not exclusive, embodiments, illustrated only by way of non-limitative example, with the support of the accompanying drawings, wherein:
- Figure 1 shows a microscope view of an embodiment of a bi-component fiber of the above described type a) according to the present invention;
- Figure 2 shows schematic views of an embodiment of an organic polyester fiber of the above described type b) according to the present invention;
- Figure 3 shows the thermo-cohesion effect following the melting of the low melting fibers according to the present invention.
- Figure 4 shows calibrated metal spindles according to the present invention determining the sheath shape.

### Detailed description of the invention.

An embodiment of a non-woven support according to the present invention is shown below.

### Example 1 (invention).

A non-woven support for industrial battery sheaths having a weight of 110-130 g/m² was realized by spunlace technology, built with 12 plies each weighing between 8 and 12 g/m², suitably arranged to maximize homogeneity and minimize porosity of the product.

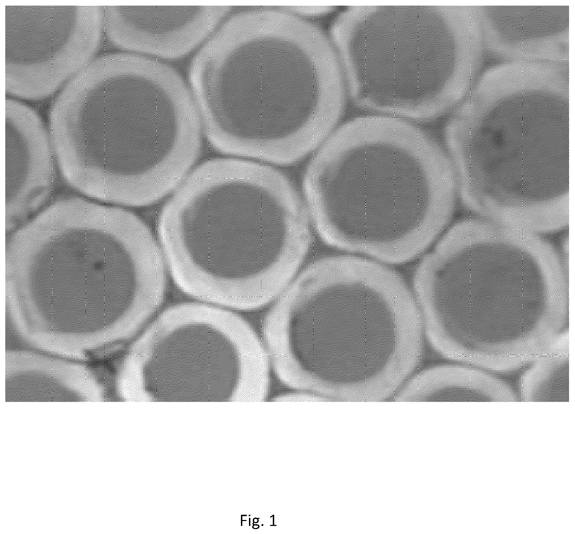

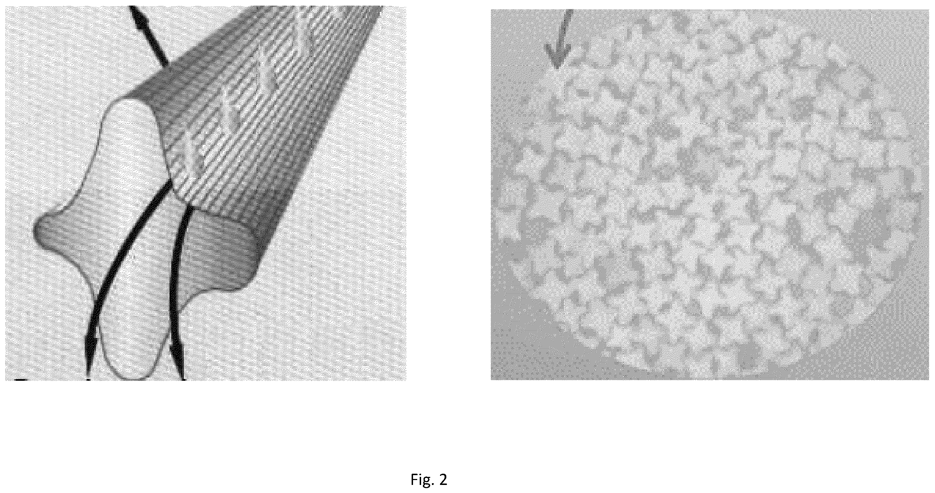

The fibers constituting the support and the relative quantities were the following:
a) bi-component fiber, in a percentage of 13% compared to the total fiber mass, with a linear density between 2-4 dtex, length 40-80 mm, consisting of two extruded materials in a coaxial way where the internal part has a melting point higher than the external part, the latter with a melting temperature lower than 200 °C, and equipped with suitable crimping, heat stabilization treatment and surface coating covering the filaments, whose visual aspect is shown in Fig. 1;
b) organic hydrophilic polyester fiber, in a percentage of 40% with respect to the total fiber mass, having density between 1.2-1.6 dTex, length 30-60 mm, provided with surface channels and appropriate crimping. An example of this type of polyester fiber is shown in Fig. 2.
c) polyester staple fiber having circular section, in a percentage of 47% with respect to the total fiber mass, with a melting point greater than 200 °C of linear density between 1-2 dtex, length 30-60mm, equipped with the appropriate crimping, heat stabilization treatment and surface coating covering the filaments.

The fibers of the a), b) and c) above described types were subjected to high pressure water jets ("spunlace" technology) which emerged from internal section nozzles designed to maximize the water kinetic energy which, being transferred to the fibers, determines their cohesion. The nozzles had maximum diameters between 90 and 160 µm, and were arranged at regular intervals of 0.6 to 1.0 mm apart, on strips of special anti-corrosion steel, with one, two or even three ranges, for the whole non-woven fabric width. Each steel strip provided with holes was mounted on an injector, which determined the water supply, at the required flow rate and pressure. The water transferred to the fiber mat was immediately and conveniently removed by means of a suction system placed under the injector, to favor the fiber cohesion. A mat of plies was thus formed consisting of the mixture of these fibers interlaced one each other. The final non-woven fabric support was obtained after the repeated passage of the fiber mat under an adequate number of injectors, positioned on both sides of the fiber mat.

Subsequently, the mixture of interlaced and crimped fibers was subjected to the resin-coating phase by depositing various polymeric binders, such as styrene-acrylics, acrylics, polyurethanes, by impregnation, foaming, coating or molding, in an amount equal to 25- 35 g/m², in order to obtain a rigid and thermoformable final product weighing between 150-160 g/m².

The resinated product was subjected to calendering to uniform the thickness and smooth the surfaces.

The above described fibers were weighed and mixed together intimately and conveyed in loaders feeding the carders forming the plies, which adequately overlapped and oriented led, after the water interlacing process, to obtain a homogeneous non-woven fabric.

The still wet non-woven fabric support, after the water interlacing phase, was conveniently calibrated in thickness, by cold calendering with calibration pressures ranging from 3 to 25 tons.

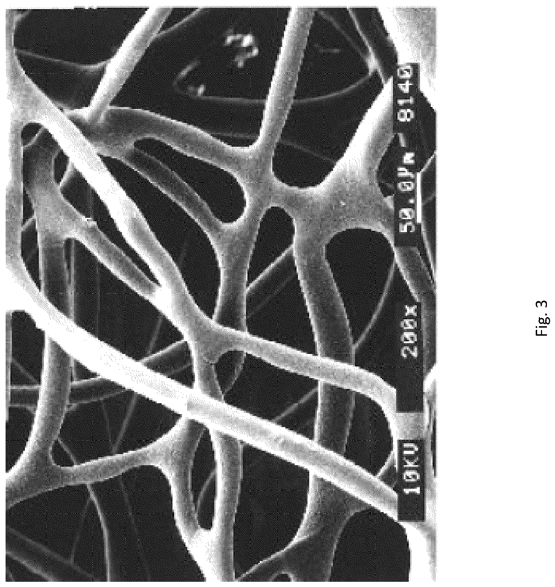

The non-woven fabric support was subsequently dried at temperatures ranging from 100 °C to 180 °C, varying according to the drying speed (typically from 1 to 5 minutes) and the quantity of polymer deposited on the non-woven fabric. The non-woven fabric support was then thermo-stabilized and melted in the low melting part of the bi-component fibers, giving compactness and rigidity to the product as shown in Fig. 3. The thermoforming phase took place at a temperature such as to allow the melting by impregnation of the low melting component of the bi-component fibers and/or any polymer resin present.

The non-woven fabric support thus dried and thermo-formed was cut in width according to the customer's needs and rolled into rolls having a diameter such as to be easily stored and handled. Each roll was protected by a film that preserved it from external agents that would have changed its characteristics during the storage period.

To realize the multi-tubular sheaths, the non-woven fabric rolls were then unwound, cut in width and transformed into strips of sizes compatible with the sheaths to be obtained. The strips were wrapped in rolls for the subsequent sewing of two layers of non-woven fabric by parallel seams in order to form pockets of a size compatible with the electrode to be obtained. In each pocket, metal spindles were inserted, calibrated in turn of a size compatible with the tubes to be obtained which, due to the thermoforming effect, determined the sheath shape, as shown in Figure 4.

### Example 2 (invention).

A non-woven support for industrial battery sheaths was realized by spunlace technology, the support having weight of 150-160 g/m², built with 16 plies each weighing between 8 and 12 g/m², suitably arranged to maximize homogeneity and minimize porosity of the product.

The fibers constituting the support were the same fibers of type a), b) and c) of Example 1, but with different percentages with respect to the total fiber mass: 40% of the bi-component fiber of type a), 40% of the fiber type hydrophilic organic polyester of type b), and 20% of the circular section polyester fiber of type c).

The process for preparing the support of Example 2 followed the same steps described above with reference to the preparation of the support of Example 1.

This product has a rigidity and thermoformability that does not require any type of resin coating.

### Example 3 (invention).

A non-woven support for industrial battery sheaths was realized by spunlace technology weighing 150-160 g/m², built with 16 plies each weighing between 8 and 12 g/m², suitably arranged to maximize homogeneity and minimize porosity of the product.

The fibers constituting the support were only the fibers of type a) and b) of Example 1 (therefore in the absence of the circular section polyester fiber of type c)), with a percentage of the total fiber mass of 40% of bi-component fiber of type a) and 60% of organic hydrophilic polyester fiber of type b).

The process for preparing the support of Example 3 followed the same steps described above with reference to the preparation of the support of Example 1.

This product has a rigidity and thermoformability that does not require any type of resin coating.

### Example 4 (comparison)

A traditional support known in the art of the 150 g/m² spunbond type in resin-coated polyester was prepared, consisting of polyester filaments bonded with synthetic thermoforming and impregnated with acrylic and/or styrene-butadienetype binding resins.

### Example 5 (comparison)

A support of 150 g/m² resin of the nonwoven fabric type known in the art was prepared as described in example 1 of the European patent EP 1961059B1, consisting of fibers of two types: single-component polyester fibers with a melting point equal to about 260 °C equal to 1.7 dTex and a length of 38 mm; two-component polyester fibers (shell PES having a melting point of about 160 °C, core PES having a melting point of about 26 °C), with a value equal to 2.2 dTex and a length of 51 mm.

Test. The materials of examples 1-5 were conveniently subjected to the following performance tests: water absorption capacity (according to ISO 9073-6), water absorption time (according to ISO 9073-6), and electrical resistance.

Table 1 below shows the results of the various tests for the described above products of the invention 1-3 and comparison 4-5.

**Table 1**

| Samples | Water absorption capacity (g of water per 100 g of non-woven fabric) | Water absorption time (seconds) | Electrical resistance (Ω/cm²) |
|---|---|---|---|
| Example 1 fibers a + b + c (invention) | 440 g | 25 sec | 0,12 |
| Example 2 fibers a + b + c (invention) | 580 g | 9 sec | 0,09 |
| Example 3 fibers a + b (invention) | 600 g | 5 sec | 0,08 |
| Example 4 (comparsion) | 200 g | 45 sec | 0,25 |
| Example 5 (comparsion) | 350 g | 40 sec | 0,15 |

The improved hydrophilicity of the non-woven fabric of Examples 1-3 of the present invention determines a significant electrical resistance reduction of the support for sheaths, improving the battery performance efficiency, linked to the fact that the greater volume of electrolyte contained in the sheath allows a better ion exchange during battery charging and use.

Furthermore, the rapid water absorption allows a faster sheath filling process with lead oxides in an aqueous solution (also called "slurry"), following the improved water flow through the non-woven fabric sheath.

In addition, in the battery manufacturing practice an improvement in the electrolyte filling times in the elements of the present invention making the battery itself is detected.

Finally, it has been experimentally proven that the high fiber thickness and distribution uniformity determines a smaller spillage of 80-100 g of lead oxides per liter of filtered slurry when filling the slurry.

As a result, after the slurry is loaded, the sheath results cleaner from the spilled lead oxides, resulting in a factory environmental condition improvement.

It has also been found that examples 1 and 2, wherein the above indicated circular section polyester fiber c) is also present in the fiber mixture, guarantee a better mechanical strength of the non-woven fabric and a considerable economic advantage in terms of production.

### Example 6.

A non-woven fabric support was created as a coupling support for traditional separators made with spunlace technology weighing 45-55 g/m², built with 4 plies each weighing between 8 and 12 g/m², suitably arranged to maximize homogeneity and minimize the porosity of the product.

The fibers making up the product were the same type a), b) and c) fibers of Example 1, with the same percentages with respect to the total fiber mass.

The process for preparing the support of Example 6 followed the same steps described above with reference to the preparation of the support of Example 1, except for the fact that, in the final phase, the non-woven support of this example was cut in rolls of height from 90 to 180 mm and then coupled to a polythene separator and further rolled up.

The use of this non-woven fabric for traditional separators allowed a longer battery life, since the polyester is not subject to depletion of its mechanical characteristics under the use conditions and maintains unaltered over time the contact between the cathode surface and the electrolyte solution, resulting in a lower electrical resistance.

Furthermore, with reference to the lead recovery at the end of its life, the use of polyester fiber coupled with plastic films (PE, PVC,...) instead of the traditional glass fiber, allowed the lead recovery, eliminating the separator components such as slag melting.

Of course, many modifications and variations of the preferred embodiment described above will be evident to the persons skilled in the art, still remaining within the scope of the invention.

Therefore, the present invention is not limited to the preferred embodiment described, illustrated only by way of non-limiting example, but is defined by the following claims.

## Claims

1. A non-woven fabric support comprising a mixture of fibers consisting of at least:
a) bi-component fiber with linear density between 2-4 dtex, length 40-80 mm, consisting of two coaxially extruded materials where the inner part has a melting point higher than the external part;
b) organic hydrophilic fibers of polyester and/or polypropylene, with a density between 1.2-1.6 dTex, length 30-60 mm, provided with surface channels.

2. A non-woven fabric support according to claim 1 composed of said mixture of fibers comprising from 5 to 60%, preferably from 20 to 60%, of said bi-component fiber and from 40 to 95%, preferably 40 to 80%, of said organic hydrophilic fiber of polyester and/or polypropylene with respect to the total fiber mass.

3. A non-woven fabric support according to any one of the preceding claims, wherein said mixture of fibers further comprises:
c) circular section staple polyester fiber with a melting point higher than 200 °C with a linear density between 1-2 dtex, length 30-60 mm.

4. A non-woven fabric support according to claim 3 composed of said mixture of fibers comprising a) from 10 to 60% of said bi-component fiber, b) from 10 to 60% of said hydrophilic organic polyester fiber and/or polypropylene, c) from 10 to 60% of said polyester staple fiber with respect to the total fiber mass.

5. A non-woven fabric support according to any one of the preceding claims, wherein said two-component fiber, said hydrophilic organic fiber of polyester and/or polypropylene and/or said polyester staple fiber is provided with crimping, or curling effects and permanent undulations.

6. A non-woven fabric support according to any one of the previous claims having a weight between 20 and 180 g/m².

7. A non-woven fabric support according to any one of the preceding claims consisting of a mat having a number of webs from 4 to 20, each weighing between 4 and 20 g/m².

8. A non-woven fabric support according to any one of the preceding claims wherein the said support is resinated by polymeric binders.

9. Method for making a non-woven fabric support comprising the steps of:
i) preparing a) a bi-component fiber with a linear density between 2-4 dtex, length 40-80 mm, consisting of two coaxially extruded materials where the inner part has a melting point higher than the external part, and b) organic hydrophilic fibers of polyester and/or polypropylene, with a density between 1.2-1.6 dTex, length 30-60 mm, provided with surface channels;
ii) interleaving said fibers a) and b) with high-pressure water jets to form a mixture of said fibers bound together.
iii) possibly resinating said non-woven fabric support by depositing polymeric binders by impregnation, foaming, spreading or molding.

10. Method according to claim 9 wherein said fiber mixture further comprises c) a circular section staple polyester fiber with a melting point higher than 200 °C with a linear density between 1-2 dtex, length 30-60 mm.

## Patentansprüche

1. Ein Vliesstoffträger, der ein Mischung aus Fasern umfasst, die mindestens aus folgendem bestehen:
a. Zweikomponenten-Faser mit linearer Dichte zwischen 2-4 dtex, Länge 40-80 mm, bestehend aus zwei koaxial extrudierten Materialien, bei denen der innere Teil einen höheren Schmelzpunkt als der äußere Teil aufweist;
b. organische hydrophile Fasern aus Polyester und /oder Polypropylen mit einer Dichte zwischen 1,2, und 1,6 dTex, Länge 30 bis 60 mm, die mit Oberflächenkanälen versehen sind.

2. Ein Vliesstoffträger gemäß Anspruch 1, bestehend aus besagter Mischung aus Fasern von 5 bis 60%, vorzugsweise von 20 bis 60%, von besagter Zweikomponenten-Faser und 40 bis 95 %, vorzugsweise 40 bis 80%, von besagter organische hydrophile Faser aus Polyester und /oder Polypropylen in Bezug auf die Gesamtfasermasse.

3. Ein Vliesstoffträger gemäß einem der vorherigen Ansprüche, wobei besagte Mischung aus Fasern weiter umfasst:
c. Polyester-Stapelfaser mit kreisförmigem Querschnitt mit einem Schmelzpunkt höher als 200 ° C mit linearer Dichte zwischen 1-2 dtex, Länge 30-60 mm.

4. Ein Vliesstoffträger gemäß Anspruch 3, bestehend aus besagter Mischung aus Fasern, der a) von 10 bis 60% von besagter Zweikomponenten-Faser, b) von 10 bis 60% von besagter organischer hydrophiler Polyesterfaser und/oder Polypropylen, c) von 10 bis 60% von besagter Polyester-Stapelfaser in Bezug auf die Gesamtfasermasse umfasst.

5. Ein Vliesstoffträger gemäß einem der vorherigen Ansprüche, wobei besagte Zweikomponenten-Faser, besagte organischer hydrophiler Polyesterfaser und/oder Polypropylen und/oder besagte Polyester-Stapelfaser mit Kräuseln oder Kräusel-Effekten und permanenten Wellungen versehen ist.

6. Ein Vliesstoffträger gemäß einem der vorherigen Ansprüche mit einem Gewicht zwischen 20 und 180 g/m².

7. Ein Vliesstoffträger gemäß einem der vorherigen Ansprüche, bestehend aus einer Matte mit einer Anzahl an Netzen von 4 bis 20, die jeweils zwischen 4 und 20 g/m² wiegen.

8. Ein Vliesstoffträger gemäß einem der vorherigen Ansprüche, wobei besagter Träger mit polymeren Bindemitteln resiniert ist.

9. Verfahren zur Herstellung eines Vliesstoffträger, das folgende Schritte umfasst:
i. Zubereitung a) einer Zweikomponenten-Faser mit linearer Dichte zwischen 2-4 dtex, Länge 40-80 mm, bestehend aus zwei koaxial extrudierten Materialien, bei denen der innere Teil einen höheren Schmelzpunkt als der äußere Teil aufweist und b) einer organischen hydrophilen Polyesterfaser und/oder Polypropylen mit einer Dichte zwischen 1,2, und 1,6 dTex, Länge 30 bis 60 mm, die mit Oberflächenkanälen versehen sind ;
ii. Zwischenlegen besagter Fasern a) und b) mit Hochdruckwasserstrahlen, um eine Mischung der miteinander verbundenen Fasern zu bilden.
iii. unter Umständen Harzen des besagten Vliesstoffträgers durch Abscheiden von Polymerbindemittels durch Imprägnieren, Schäumen, Verteilen oder Formen.

10. Verfahren gemäß Anspruch 9, wobei besagte Fasermischung weiter c) eine Polyester-Stapelfaser mit kreisförmigem Querschnitt mit einem Schmelzpunkt höher als 200 °C mit linearer Dichte zwischen 1-2 dtex, Länge 30-60 mm umfasst.

## Revendications

1. Support en tissu non tissé comprenant un mélange de fibres constitué d'au moins:
a) une fibre bi-composante avec une densité linéaire comprise entre 2-4 dtex, une longueur de 40-80 mm, constituée de deux matériaux extrudés coaxialement où la partie interne a un point de fusion plus élevé que la partie externe;
b) des fibres organiques hydrophiles de polyester et/ou de polypropylène, d'une densité comprise entre 1,2 et 1,6 dTex, d'une longueur de 30 à 60 mm, pourvues de canaux superficiels.

2. Support en tissu non tissé selon la revendication 1 composé dudit mélange de fibres comprenant de 5 à 60%, de préférence de 20 à 60%, de ladite fibre bi-composante et de 40 à 95%, de préférence de 40 à 80%, de ladite fibre organique hydrophile de polyester et/ou de polypropylène par rapport à la masse totale de fibres.

3. Support en tissu non tissé selon l'une quelconque des revendications précédentes, dans lequel ledit mélange de fibres comprend en outre:
c) une fibre de polyester discontinue à section circulaire avec un point de fusion supérieur à 200°C avec une densité linéaire entre 1-2 dtex, longueur 30-60 mm.

4. Support en tissu non tissé selon la revendication 3, composé dudit mélange de fibres comprenant a) de 10 à 60 % de ladite fibre bi-composante, b) de 10 à 60 % de ladite fibre organique hydrophile de polyester et/ou de polypropylène, c) de 10 à 60 % de ladite fibre discontinue de polyester par rapport à la masse totale de fibres.

5. Support en tissu non tissé selon l'une quelconque des revendications précédentes, dans lequel ladite fibre bi-composante, ladite fibre organique hydrophile de polyester et/ou de polypropylène et/ou ladite fibre discontinue de polyester est pourvue de crêpage, de bouclage et d'ondulations permanentes.

6. Support en tissu non tissé selon l'une quelconque des revendications précédentes ayant un poids compris entre 20 et 180 g/m².

7. Support en tissu non tissé selon l'une quelconque des revendications précédentes constitué d'un mat comportant un nombre de bandes de 4 à 20, chacune pesant entre 4 et 20 g/m².

8. Support en tissu non tissé selon l'une quelconque des revendications précédentes, dans lequel ledit support est résiné par des liants polymères.

9. Procédé de fabrication d'un support en tissu non tissé comprenant les étapes suivantes:
i) préparation a) d'une fibre bi-composante avec une densité linéaire entre 2-4 dtex, longueur 40-80 mm, constituée de deux matériaux extrudés coaxialement où la partie interne a un point de fusion plus élevé que la partie externe, et b) de fibres organiques hydrophiles de polyester et/ou de polypropylène, avec une densité entre 1,2 et 1,6 dTex, longueur 30-60 mm, pourvues de canaux superficiels;
ii) entrelacement desdites fibres a) et b) avec des jets d'eau à haute pression pour former un mélange desdites fibres liées entre elles;
iii) résinage éventuel dudit support en tissu non tissé en déposant des liants polymères par imprégnation, stratification, recouvrement ou moulage.

10. Procédé selon la revendication 9, dans lequel ledit mélange de fibres comprend en outre c) une fibre de polyester discontinue à section circulaire avec un point de fusion supérieur à 200°C avec une densité linéaire entre 1-2 dtex, longueur 30-60 mm.
